# EUROPEAN PATENT SPECIFICATION

(11) **EP 1 704 983 B1**
(45) Date of publication and mention of the grant of the patent: **10.12.2014**
(21) Application number: 04807765.5
(22) Date of filing: 24.12.2004
(51) Int. Cl.: B29C 45/17, B29C 45/40

(54) **DRIVE UNIT OF MOLDING MACHINE AND INJECTION MOLDING MACHINE**
ANTRIEBSEINHEIT FÜR EINE SPRITZGIESSMASCHINE UND SPRITZGIESSMASCHINE
UNITÉ D'ENTRAINEMENT D'UNE MACHINE DE MOULAGE ET MACHINE DE MOULAGE PAR INJECTION

(30) Priority: 13.01.2004 JP 2004005223
(43) Date of publication of application: 27.09.2006
(73) Proprietor: Sumitomo Heavy Industries, Ltd., Tokyo 141-6025 (JP)
(72) Inventor: ONISHI, Masashi; c/o SUMITOMO HEAVY INDUSTRIES,, Inage-ku, Chiba-shi, Chiba;2630001 (JP); OKADA, Norihito; c/o SUMITOMO HEAVY INDUSTRIES,, Inage-ku, Chiba-shi, Chiba;2630001 (JP)
(74) Representative: Emde, Eric
(86) International application number: PCT/JP2004/019409
(87) International publication number: WO 2005/068155

(56) References cited:
- JP-A- 5 131 497
- JP-A- 6 143 079
- JP-A- 9 164 567
- JP-A- 9 164 567
- JP-A- 11 170 319
- JP-A- 11 170 319
- JP-A- 11 235 744
- JP-A- 2000 167 875
- JP-A- 2000 167 875
- JP-A- 2002 248 652
- JP-A- 2003 117 970
- JP-A- 2003 117 970
- JP-A- 2003 129 748
- JP-A- 2003 129 748
- US-A- 6 062 843
- US-A1- 2002 064 574
- 'Brake Systems Application Guide', [Online] Retrieved from the Internet: <URL:http://www.gemcodirect.com/products/br akes/guide/p9.htm> [retrieved on 2012-04-27]

## Description

### TECHNICAL FIELD

The present invention relates to molding machines, and more particularly to an injection molding machine that employs a motor with a brake unit as the driving source of a drive mechanism.

### BACKGROUND ART

Molding machines such as injection molding machines include an injection apparatus, a mold apparatus, and a mold clamping apparatus. The injection apparatus includes a heating cylinder and a screw. The screw is provided in the heating cylinder so as to be rotatable and movable in forward and backward directions. In a metering process, resin supplied to the heating cylinder is heated and melted to be stored in front of the screw. In an injection process, the screw is moved forward so as to fill the cavity space of the mold apparatus with the resin stored in front of the screw.

The mold apparatus includes a stationary mold and a movable mold. The mold clamping apparatus includes a stationary platen for attaching the stationary mold, a movable platen for attaching the movable mold, and a toggle mechanism for causing the movable platen to reciprocate. By causing the movable platen to move forward by putting the toggle mechanism into operation, the movable mold is brought into contact with the stationary mold so that mold closing is performed. The mold closing forms the cavity space between the stationary mold and the movable mold. Then, mold clamping is performed by pressing the movable mold against the stationary mold with a predetermined mold clamping force.

The melted resin with which the cavity space is filled is cooled as the mold apparatus is cooled. As a result, the melted resin is hardened so as to become a molded article in the cavity space. Then, the toggle mechanism is caused to operate, so that the movable platen is moved backward. As a result, the movable mold is detached from the stationary mold, so that mold opening is performed. At this point, an ejector apparatus as a drive unit provided to the movable platen is caused to operate. That is, an ejector pin as a driven part is caused to project so as to eject the molded article from the mold, and thereby, mold release is performed.

Therefore, in the ejector apparatus, the front end of the ejector pin faces the cavity space, and the rear end is fixed to an ejector plate. Further, an ejector pin feed unit is coupled to the rear end of the ejector plate through an ejector rod.

The ejector pin feed unit includes a motor as a drive part, a ball screw, etc. If the motor is driven while mold opening is being performed, a rotational force generated by the motor is transmitted from an output shaft to the ball screw. The rotational motion is converted into linear motion in the ball screw, and the linear motion is transmitted to the ejector pin through the ejector rod, thereby causing the ejector pin to move forward. As a result, the molded article remaining in the movable mold is ejected by the ejector pin, and thereby, mold release is performed (see, for example, JP 09-164 567 A).

By the way, in the case of cleaning the mold apparatus, the residual resin adhering to the stationary mold and the movable mold is removed with mold opening being performed. At this point, the ejector pin is cleaned together as a work target. In this case, the operation of the motor is stopped, and the ejector pin is fixed to a predetermined work position in a projected state.

Here, in the conventional ejector apparatus, if the ejector pin is moved (goes backward) for some reason such as by an external force while a cleaning operation is being performed, it is impossible to continue the cleaning operation. Therefore, employment of a motor with a brake to which a brake unit formed of a brake disc and a brake pad is attached as a motor for driving the ejector pin is considered.

Depending on the condition of friction of the brake disc and the brake pad, however, the braking effect is reduced so that the ejector pin may move for some reason as described above. Accordingly, it is preferable to recognize the condition of friction of the brake disc and the brake pad in advance. However, in the motor with the brake, the brake unit is covered with a motor cover so that the condition of friction of the brake disc and the brake pad cannot be determined. Accordingly, there is a problem in that it is impossible to know the exact time of maintenance of the brake unit.

Further, a motor for mold clamping as a drive part may also employ a motor with a brake. In this case also, if some external force is applied to the mold apparatus, the movable platen may move depending on the condition of friction of a brake disc and a brake pad. Therefore, workability is poor. Further, since a brake unit is covered with a motor cover, the condition of friction of the brake disc and the brake pad cannot be determined. Accordingly, there is a problem in that it is impossible to know the exact time of maintenance of the brake unit.

As described above, the injection molding machine includes multiple drive units such as an injection apparatus, a metering apparatus, a mold clamping apparatus, and an ejector apparatus. These drive units are driven by an injection apparatus driving motor, a metering apparatus driving motor, a mold clamping apparatus driving motor, and an ejector apparatus driving motor, respectively. Each motor is controlled by a molding machine controller through a servo driver. Of the above-described various types of motors, for example, the ejector apparatus driving motor may be provided with a brake unit.

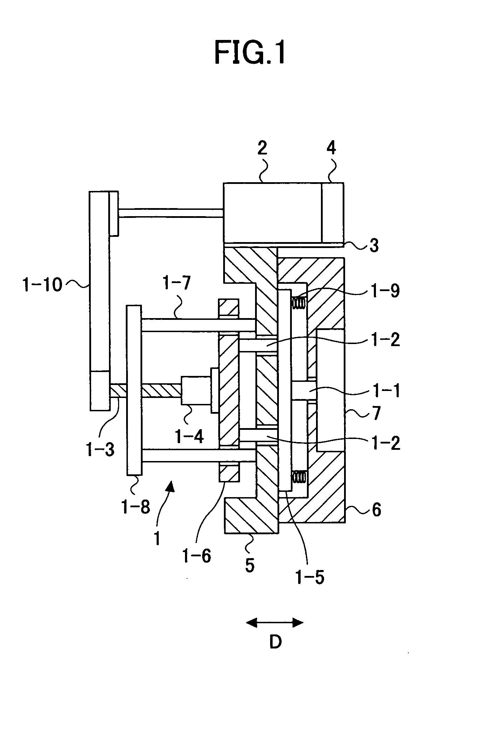

Here, a description is given in more detail, with reference to FIG. 1, of the conventional ejector apparatus. In FIG. 1, an ejector apparatus 1 is provided on the rear of a movable platen 5. The ejector apparatus 1 has an ejector pin 1-1 extending through a movable mold 6 to have its front end (right end in the drawing) facing a cavity space 7, one or more ejector rods 1-2 (here, the case of two ejector rods is shown) provided in the rear (on the left in the drawing) of the ejector pin 1-1, a ball screw shaft 1-3 provided in the rear of the ejector rods 1-2 and rotated by a servomotor 2, and a ball screw nut 1-4 into which the ball screw shaft 1-3 is screwed. An ejector plate 1-5 is provided between the ejector pin 1-1 and the ejector rods 1-2. A slide plate 1-6 is provided between the ejector rods 1-2 and the ball screw nut 1-4.

Guide rods 1-7 to guide the sliding of the slide plate 1-6 are attached to the rear of the movable platen 5. A support plate 1-8 for supporting the ball screw shaft 1-3 is attached to the rear of the guide rods 1-7. Multiple springs for returning (hereinafter referred to as return springs) 1-9 are provided between the rear of the movable mold 6 and the ejector plate 1-5. The return springs 1-9 return the projecting ejector pin 1-1 to its original position (position shown in the drawing) through the ejector plate 1-5. A timing belt 1-10 is engaged with and extended between the output shaft of the servomotor 2 and the ball screw shaft 1-3. The servomotor 2 is provided on the movable platen 5 through an attachment plate 3, and has a brake unit 4 provided in its rear part. That is, the servomotor 2 is movable with the movable platen 5.

In general, an electromagnetic brake is used as a brake unit. Usually, the electromagnetic brake enters a brake release state when power is turned on, and enters a braking state when power is turned off.

In the ejector apparatus 1 of the above-described configuration, when the servomotor 2 is driven, its rotational motion is converted into linear motion by the combination of the ball screw shaft 1-3 and the ball screw nut 1-4. The linear motion is transmitted to the ejector rods 1-2, so that the ejector rods 1-2 and the ejector pin 1-1 are reciprocated in the directions of arrow D (see, for example, JP 09-207 142).

By the way, not only in the case of the ejector apparatus as described above, but also in the case of providing a servomotor for apparatus driving in the injection molding machine with a brake unit, a braking torque that allows the rated torque of the servomotor to be retained is selected.

Here, in the case of providing the driving servomotor of the ejector apparatus with a brake unit as described above, the biasing force generated by the return springs 1-9 may be greater than the thrust generated with the rated torque Tc of the servomotor. In this case, the ejector pin 1-1 is reciprocated with a torque T between the rated torque Tc and the peak torque Tp of the servomotor (Tp > T > Tc).

On the other hand, in the case of performing maintenance on the ejector apparatus, it is necessary to have the ejector pin 1-1 projected. In this case, even if the driving servomotor of the ejector apparatus is braked by the brake unit, the ejector pin 1-1 is returned by the return springs 1-9, which is dangerous. Further, in the case of performing position control only with servo control, there is also danger due to malfunction. Therefore, it is desirable to retain a position with a brake and to turn off the servomotor.

Further, usually, each of the mold clamping apparatus, the injection apparatus, and the ejector apparatus is intermittently driven independently in the injection molding machine, and accordingly, is often operated while outputting a torque higher than the rated torque specified by continuous running. In this case, if the braking torque is specified by the rated torque of the servomotor, it can operate while dragging a brake. In particular, if the servomotor operates at the peak torque Tp, it can operate in a braked state, that is, dragging a brake, even if the brake is not released. That is, the brake unit is driven by a brake driving circuit different from a servo driver, and if there occurs an open circuit or the like in the brake driving circuit, a brake is applied at that point. However, if the servomotor is operating at the peak torque Tp, the servomotor operates against the braking force. In this case, not only are abrasion of a brake lining and its seizure by friction heat accelerated, but also the servomotor is overloaded and may cause abnormal generation of heat. Further, there is a problem in that the advance of this state leads to sudden stoppage of the servomotor.

On the other hand, if there occurs a problem such as an open circuit in the brake driving circuit, it has been impossible so far to recognize the problem before the brake unit fails and stops suddenly. Accordingly, it is required to trace the failure to multiple parts other than the brake unit, thus causing a problem in that it takes time before restoration.

US-A-6,062,843 was used as a basis for the preamble of claim 1 and discloses a motor control apparatus for an injection molding machine. A motor control apparatus for an injection molding machine has a control function section for stopping a drive motor; i.e., a servomotor in order to stop a movable member, upon reception of an open signal indicating that a safety door is opened. The motor control apparatus further includes an additional control function section for performing position control for the servomotor, upon reception of the open signal, so as to stop the movable member at a predetermined position. Therefore, when the safety door is opened and thus the open signal is supplied to the additional control function section, the additional control function section performs position control for the servomotor such that the movable member stops at the predetermined position.

US 2002/0064574 A1 discloses an injection moulding machine comprising a mould mounting plate movable by an electric motor by means of a closing device. There is provided a guard grille having a gate, the opening of which interrupts the power supply to the electric motor by actuation of at least one safety switch. There is also provided a braking device. The braking device is arranged between the electric motor and the closing device and is provided with a monitoring device.

JP 05-131497 A discloses a mold-clamping device apparatus of a transfer molding machine. In order to protect a direct drive motor for vertically moving a lower mold attaching plate, the stator of an electric direct drive motor is fixed on a base. A nut is secured on the rotor of the motor. A ball screw engaged to the nut is fastened to the lower mold attaching plate. In this way, the horizontal rotation of the rotor is converted into vertical movement so as to be transmitted to the lower mold attaching plate. Then, a braking mechanism is provided that serves to brake the rotor mechanically. For instance, when the electric source of the direct drive motor is cut off, the rotor is braked so that the lower mold attaching plate is prevented from falling down. When the electricity of the direct drive motor is present and the lower mold attaching plate is stopped for a long time, the rotor is braked for preventing the direct drive motor from being exerted with excessive loads.

JP 06-143079 A discloses a vertical shaft braking device. In order to provide a vertical shaft braking device which prevents a friction plate from coming in contact with a armature (or a braking plate) while wear and tear due to friction are restricted when the brake is released, in a negative actuation type braking device where a braking plate and an armature are arranged while a friction plate is held in between, the friction plate is pressed against the braking plate via the armature by a braking means at all times while the brake is being applied, and the device will not be in a brake releasing condition before power is applied to a brake releasing means with energizing restricted. A separation means is provided so that the friction plate does not come in contact directly with the surface of the armature or the braking plate when the brake is released.

### DISCLOSURE OF THE INVENTION

### PROBLEMS TO BE SOLVED BY THE INVENTION

It is a general object of the present invention to provide an improved and useful drive unit for molding machines in which the above-described problems are solved.

A more specific object of the present invention is to provide a drive unit for molding machines that can prevent a driven part from moving suddenly while driving of a driving part having a brake attached thereto is stopped.

Another object of the present invention is to provide an injection molding machine with increased safety at the time of a driven part being braked by a brake unit . The invention is defined by a drive unit in accordance with claim 1.

### MEANS FOR SOLVING THE PROBLEMS

In order to achieve the above-described objects, according to the present invention, there is provided an injection molding machine including a motor for driving an ejector apparatus having a brake unit, wherein the brake unit generates a braking torque greater than a maximum torque generable by the motor.

In the injection molding machine according to the present invention, it is preferable that the brake unit be an electromagnetic brake, and that a brake driving circuit configured to supply power to the brake unit; an open-circuit detection circuit configured to detect an open circuit of the brake driving circuit; and a controller configured to cause a display to display the open circuit and stop the rotation of the motor upon detection of the open circuit in the open-circuit detection circuit be further provided.

In the injection molding machine according to the present invention, the motor having the brake unit is a motor for driving an ejector apparatus; the ejector apparatus having a return spring to bias an ejector pin in a direction opposite to a direction in which the ejector pin is projected; and the braking torque is greater than or equal to a torque generated by the biasing force of the return spring.

Further, it is preferable that the injection molding machine according to the present invention further include a controller configured to cause the brake unit to perform braking after detecting stoppage of rotation of the motor having the brake unit.

In the drive unit of the molding machine according to the present invention, it is preferable that the brake unit include a brake disc attached to the output shaft; a brake pad fixed so as to be unrotatable with respect to the frame, and configured to be pressed against the brake disc; and an operation part provided on the frame and configured to press the brake pad against the brake disc. Further, the brake unit may be an electromagnetic brake having an electromagnetic coil configured to move the brake pad in order to release a braking force.

The drive unit of the molding machine according to the present invention may further include a brake cover attached to the frame and covering the brake unit with a part of the brake unit being open; and a rotational speed detection part attached to the brake cover and configured to detect the rotational speed of the output shaft. Further, the drive unit of the molding machine according to the present invention may further include a brake cover attached to the frame and covering the brake unit with a part of the brake unit being open, wherein the brake cover may include a strip-shaped body. Further,' the output shaft may be hollow, and a part of a movement mechanism for moving the driven part may be provided in the output shaft.

### EFFECTS OF THE INVENTION

According to the above-described injection molding machine according to the present invention, it is possible to prevent an apparatus from moving even with a reaction force corresponding to the maximum thrust of the apparatus driving motor being applied as an apparatus load while braking is being performed by the brake unit. Further, in the case of the brake unit being an electromagnetic brake, even if an open circuit occurs in the brake driving circuit, it is possible to prevent operating against the braking force with a brake being applied by the brake unit. Accordingly, it is possible to prevent seizure and abrasion of a brake lining and heat generation of the motor caused by operating with a brake in operation. Further, it is possible to prevent sudden stoppage of the apparatus due to their progress.

Further, according to the above-described drive unit of a molding machine according to the present invention, the brake unit stops the rotation of the output shaft. Therefore, at the time of stopping driving of the drive unit and performing a predetermined operation, it is possible to stop a driven part from moving. Accordingly, it is possible to continue the predetermined operation without interruption. Further, since at least part of the brake unit is left open, it is possible to maintain and manage the brake unit with ease.

### BRIEF DESCRIPTION OF THE DRAWINGS

FIG. 1 is a diagram showing a configuration of an ejector apparatus in a conventional injection molding machine.
FIG. 2 is a cross-sectional view of an ejector pin feed unit of an ejector apparatus according to a first embodiment of the present invention.
FIG. 3 is a side view of the ejector pin feed unit of the ejector apparatus according to the first embodiment of the present invention.
FIG. 4 is a cross-sectional view of the ejector apparatus according to the first embodiment of the present invention.
FIG. 5 is a control circuit diagram of the ejector pin feed unit of the ejector apparatus according to the first embodiment of the present invention.
FIG. 6 is a circuit diagram of a control system of multiple apparatus driving motors provided in an injection molding machine to which a second embodiment of the present invention is applied.
FIG. 7 is a block diagram of a driving circuit and an open-circuit detection circuit of a brake unit in the case of applying the second embodiment of the present invention to an ejector servomotor in an ejector apparatus of the injection molding machine.
FIG. 8 is a diagram showing the entire configuration of the injection molding machine to which the present invention is applied.

### BEST MODE FOR CARRYING OUT THE INVENTION

A detailed description is given below, with reference to the drawings, of embodiments of the present invention. In the following embodiments, the present invention is applied to an ejector pin feed unit (drive unit) incorporated in an ejector apparatus mounted in a molding machine such as an injection molding machine.

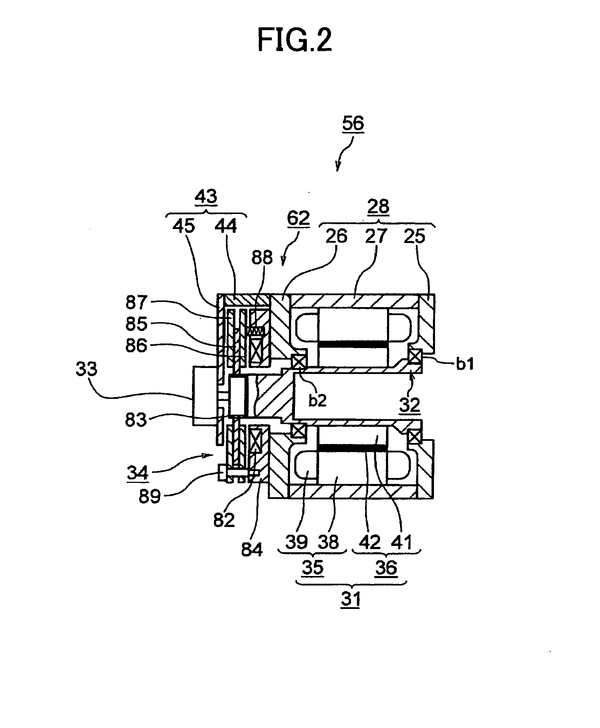

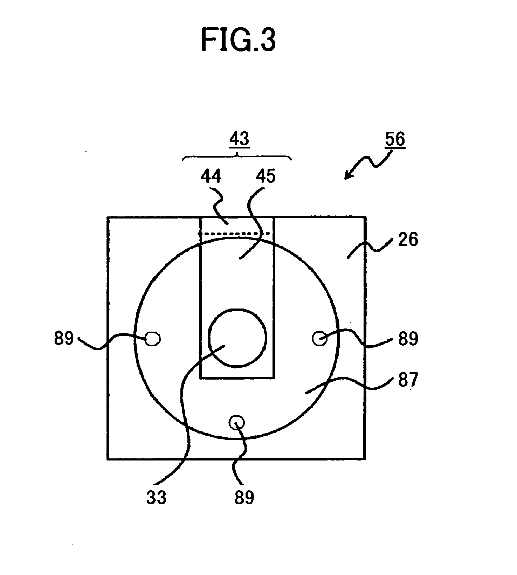

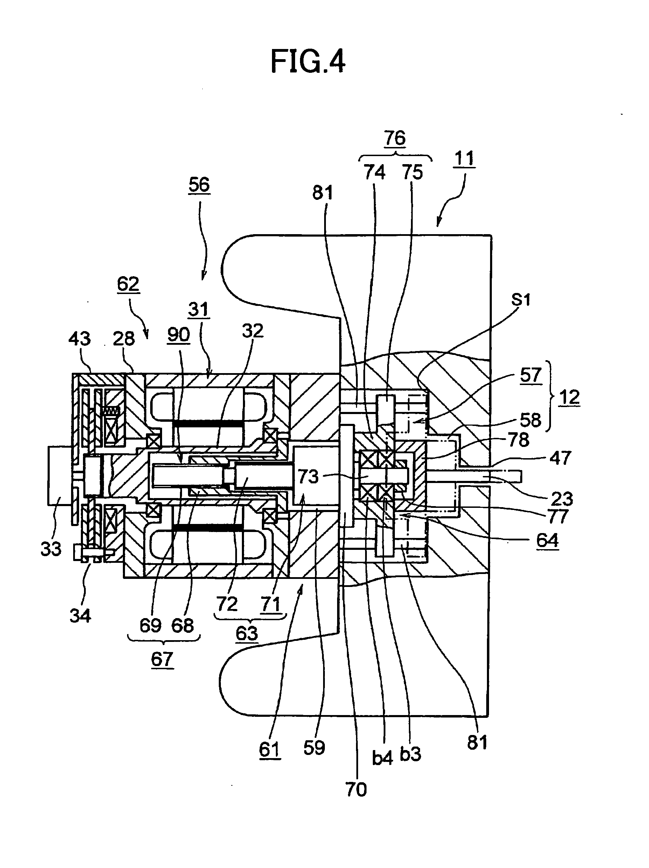

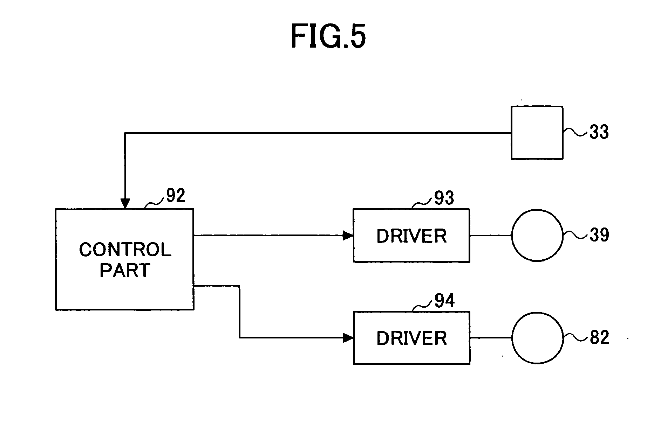

First, a description is given, with reference to FIGS. 2 through 5, of a first embodiment of the present invention. FIG. 2 is a cross-sectional view of an ejector pin feed unit that is a drive unit according to the first embodiment of the present invention. FIG. 3 is a side view of the ejector pin feed unit according to the first embodiment of the present invention. FIG. 4 is a cross-sectional view of an ejector apparatus in which the ejector pin feed unit according to the first embodiment of the present invention is incorporated. FIG. 5 is a control circuit diagram of the ejector pin feed unit according to the first embodiment of the present invention.

First, referring to FIG. 4, a movable mold (not shown in the drawing) as a first mold is attached to the front end (right end in FIG. 4) of a movable platen 11 as a first support platen. A stationary platen (not shown in the drawing) as a second support platen is provided opposite the movable platen 11. A stationary mold (not shown in the drawing) as a second mold, while opposing the movable mold, is fixed to the stationary platen. The stationary mold and the movable mold form a mold apparatus.

The movable platen 11 is moved forward and backward (moved rightward and leftward in FIG. 4) along tie bars (not shown in the drawing) by a toggle mechanism (not shown in the drawing) provided at the rear end (left end in FIG. 4) of the movable platen 11, so that the mold closing, mold clamping, and mold opening of the mold apparatus are performed. Further, in order to cause the toggle mechanism to operate, a motor for mold clamping (not shown in the drawing) as a drive part for mold clamping, a ball screw (not shown in the drawing) as a motion direction conversion part to receive rotation generated by driving the motor for mold clamping and converting the rotational motion into linear motion, a crosshead to transmit the linear motion to the toggle mechanism, etc. are provided. The above-described movable platen 11, stationary platen, toggle mechanism, motor for mold clamping, ball screw, crosshead, etc., form a mold clamping apparatus.

By putting the mold clamping apparatus into operation, the movable platen 11 is moved forward (moved rightward in FIG. 4) at the time of mold closing so as to form a cavity space between the stationary mold and the movable mold, and a mold clamping force is generated between the stationary mold and the movable mold at the time of mold clamping. At this point, the cavity space is filled with melted resin, which is cooled to become a molded article. At the time of mold opening, as the movable platen 11 is moved backward (moved leftward in FIG. 4), the movable mold is moved backward while holding the molded article. Next, the molded article held by the movable mold is ejected by the ejector apparatus, and thereby, mold release is performed.

In the ejector apparatus, an ejector pin (not shown in the drawing) as a driven part is provided in the movable mold with its front end facing the cavity space and its rear end fixed to an ejector plate (not shown in the drawing). An ejector pin feed unit 56 is coupled to the rear end of the ejector plate. When the ejector pin feed unit 56 is put into operation to move the ejector plate forward, the ejector pin fixed to the ejector plate is moved forward. At the end of mold release, the ejector pin is moved backward by the biasing force of return springs (not shown in the drawing) provided on the front of the ejector plate.

At least part of the above-described ejector pin feed unit 56 is housed in a recess 12 formed on the rear end face (left end face in FIG. 4) of the movable platen 11. The recess 12 has a large-diameter first housing part 57 and a small-diameter second housing part 58 formed in front (on the right in FIG. 4) of the first housing part 57.

The ejector pin feed unit 56 includes a driving unit 62 attached to a predetermined part of the movable platen 11 through an annular attachment plate 61 having a through hole 59 formed in the center thereof; a ball screw 63 as a first motion direction conversion part to receive rotation generated by the driving unit 62 and convert the rotational motion into linear motion with rotation, that is, rotational-linear motion; a bearing box 64 as a second motion direction conversion part to convert the rotational-linear motion generated by the ball screw 63 into linear motion without rotation and as a linear motion transmission part; and an ejector rod 23 as a transmission member to receive the linear motion generated by the bearing box 64 and transmit the linear motion to the ejector pin through the ejector plate, thereby moving the ejector pin forward and backward.

In the bearing box 64, multiple guide bars 81 (of which two guide bars 81 are shown in FIG. 4) are provided in the first housing part 57 in order to convert the rotational-linear motion into linear motion without rotation. Each guide bar 81 has its rear end attached to the attachment plate 61 and has its front end attached to the movable platen 11 at a bottom surface S1 of the first housing part 57. The guide bars 81 function as rotation stop bars to stop the bearing box 64 from rotating.

In this embodiment, the driving unit 62 is attached to the movable platen 11 through the attachment plate 61 and the guide bars 81. Alternatively, the driving unit 62 may be attached to the movable platen 11 only through the guide bars 81 without intervention of the attachment plate 61.

The driving unit 62 includes a motor 31 with a hollow output shaft 32 as a drive part for projecting; a spline unit 67 provided in the output shaft 32 and serving as a rotation transmission part to transmit the rotation of the output shaft 32 to the ball screw 63; an encoder 33 attached to the rear end of the output shaft 32 and serving as a rotational speed detection part to detect the rotational speed of the motor 31 by detecting the rotational speed of the output shaft 32; and a brake unit 34 provided in the rear end part (left end part in FIG. 4) of the output shaft 32 and selectively stopping the rotation of the output shaft 32.

Referring to FIG. 2, the motor 31 includes a frame 28 formed of a front flange 25 attached to the attachment plate 61, a rear flange 26, and a cylindrical body coupling the front flange 25 and the rear flange 26; a stator 35 housed in the frame 28 and attached to the cylindrical body 27; a rotor 36 provided rotatably in the stator 35; and the above-described output shaft 32. The stator 35 includes a core 38 and coils 39. The rotor 36 includes a core 41 and a permanent magnet 42 provided on the exterior cylindrical surface of the core 41. The output shaft 32 is provided so as to be rotatable relative to the frame 28. The front end of the output shaft 32 is attached rotatably to the front flange 25 with a bearing b1. The rear end of the output shaft 32 is attached rotatably to the rear flange 26 with a bearing b2. The output shaft 32 can be rotated by driving the motor 31 by supplying the coils 39 with current generated by an inverter (not shown in the drawing). The spline unit 67 and the ball screw 63 form a mechanism part for moving the ejector pin.

The above-described encoder 33 is attached to the frame 28, being supported by an L-letter-shaped bracket 43 as a support member covering part of the brake unit 34 and functioning as a brake cover. The encoder 33 is coupled to the rear end of the output shaft 32 extending through the brake unit 34. The bracket 43 is formed of a strip-shaped body having a width sufficiently smaller than the width of the frame 28 and slightly greater than the diameter of the encoder 33. The bracket 43 includes a horizontal part 44 extending backward (leftward in FIGS. 2 and 4) from the upper end of the rear flange 26, and a pendent part 45 suspended from the rear end of the horizontal part 44 down to slightly below the shaft of the motor 31. Accordingly, at least part of the brake unit 34 is left open on the sides of the bracket 43 (in the directions perpendicular to the axial direction of the output shaft 32). It is preferable that the bracket 43 be provided removably on the frame 28.

Referring to FIG. 4, the spline unit 67 includes a cylindrical spline nut 68 attached to the front end of the output shaft 32 so as to extend backward up to the substantial center in the axial directions in the output shaft 32 and having splines formed on the interior cylindrical surface of its rear end part; and a rod-shaped spline shaft part 69 having splines formed on its exterior cylindrical surface and engaged with the spline nut 68 through the splines. The spline nut 68 and the spline shaft part 69 are provided so as to be movable in the axial directions with respect to each other and immovable with respect to the circumferential directions. The ball screw 63 includes a ball screw shaft part 72 as a first conversion element formed in unity with the spline shaft part 69 and provided so as to be movable forward and backward; and a ball nut 71 as a second conversion element screwed to the ball screw part 72, provided so as to be movable relative to the spline unit 67, and attached to the attachment plate 61. A shaft part 73 is formed unitarily with the ball screw shaft part 72 at its front end. The spline shaft part 69, the ball screw shaft part 72, and the shaft part 73 form a shaft unit 90. In the shaft unit 90, the spline shaft part 69 is formed in the rear end part, the ball screw shaft part 72 is formed in the intermediate part, and the shaft part 73 is formed in the front end part (right end part in FIG. 4).

In the output shaft 32, at least part of the ball screw 63 (the ball screw shaft part 72 in this embodiment) is provided so as to be movable forward and backward, so that the output shaft 32 and part of the ball screw shaft part 72 overlap. Accordingly, it is possible to reduce the axial dimension of the first housing part 57. In this embodiment, the ball screw shaft part 72 is provided in the output shaft 32. It is also possible to provide the ball nut 71 therein.

The bearing box 64 includes a housing 76 including a cylindrical part 74 having its rear end fixed to the front end face (right end face in FIG. 4) of a flange part 70 of the ball nut 71, and a projection part 75 formed to extend radially outward from the front end of the cylindrical part 74; two bearings b3 and b4 to support the shaft part 73 in the housing 76; a pressing nut 77 pressing the bearings b3 and b4 against a step part between the ball screw shaft part 72 and the shaft part 73; and a pressing plate 78 covering the front end part of the shaft part 73. The rear end of the ejector rod 23 is attached to the pressing plate 78. The ejector rod 23 extends forward on the same axis line as the shaft unit 90, and the front end of the ejector rod 23 is provided in a hole 47 formed in the center of the movable platen 11.

Referring to FIG. 5, in the ejector apparatus of an injection molding machine having the above-described configuration, when the driving means of a control part 92 performs driving and a driving signal is fed to a driver 93, the driver 93 supplies current to the coils 39. When the motor 31 is driven by the supplied current, the rotational force of the rotor 36 is transmitted to the output shaft 32, and is transmitted from the output shaft 32 to the shaft unit 90 through the spline nut 68. At this point, the rotational speed of the output shaft 32 and the rotational speed of the motor 31 are detected by the encoder 33, and a detection signal is fed to the control part 92. When the rotation is transmitted to the shaft unit 90, the shaft unit 90 is caused to move forward rotating by the ball nut 71 and the ball screw shaft part 72 screwed together.

When the shaft unit 90 is caused to move forward rotating, the housing 76 and the pressing plate 78 are moved forward, so that the ejector rod 23 is moved forward.

As described above, when the motor 31 is driven in the forward direction so as to rotate the shaft unit 90 through the output shaft 32 in the forward direction, the shaft unit 90 is moved forward. With this, the ejector rod 23 moves forward, and the ejector pin moves forward through the ejector plate, so that it is possible to eject a molded article. On the other hand, when the motor 31 is driven in the reverse direction so as to rotate the shaft unit 90 through the output shaft 32 in the reverse direction, the shaft unit 90 is moved backward, and with this, the ejector rod moves backward. At this point, the biasing force of the return springs moves the ejector pin backward through the ejector plate.

By the way, in the case of cleaning the mold apparatus, the residual resin adhering to the stationary mold and the movable mold is removed with mold opening being performed. At this point, the ejector pin is cleaned together as a work target. In this case, when the control part 92 turns the driving signal OFF in the ejector pin feed unit 56, the supply of current to the coils 39 is stopped, so that the driving of the motor 31 is stopped. By stopping the driving of the motor 31 with the ejector pin being projected, it is possible to stop the ejector pin at a predetermined work position projecting from the stationary mold.

However, if the ejector pin is moved and goes backward for some reason while a cleaning operation is being performed, it is impossible to continue the operation.

Therefore, as the above-described brake unit, a negative-actuation-type electromagnetic brake is employed, for example. For this, as shown in FIG. 2, the brake unit 34 includes a core 84 attached to the rear flange 26; a coil 82 provided in a predetermined part of the core 84 so as to face the rear end face of the core 84; an annular brake disc 85 as a braked member; first and second annular brake pads 86 and 87 as brake members provided in front of and behind the brake disc 85 in a sandwiching manner and coming into contact with the brake disc 85; springs 88 as an operation part and biasing members provided in multiple parts of the core 84 in its circumferential directions so as to oppose the first brake pad 86; and rotation stop rods 89 formed of bolts as fixed members provided near the peripheries of the first and second brake pads 86 and 87 in multiple parts (four parts in this embodiment, of which one is shown in FIG. 2 and three are shown in FIG. 3) in their circumferential directions. The rotation stop rods function as "rotation stoppers" for preventing the rotation of the brake pads at the time of applying a brake by sandwiching with the brake pads 86 and 87.

The brake disc 85 is spline-engaged at its inside circumferential edge with a spline part 83 as an engagement part formed on the exterior cylindrical surface of the rear end part of the output shaft 32, and is rotated in unity with the output shaft 32. The rotation stop rods 89 support the first and second brake pads 86 and 87 so that the first and second brake pads 86 and 87 are movable in the axial directions and immovable in the rotational directions. The core 84 and the coil 82 form an electromagnet.

Accordingly, when the control part 92 feeds a driving signal to the driver 93 so that a current is supplied to the coils 39, the brake releasing means of the control part 92 performs brake releasing, feeding a brake releasing signal to a driver 94 so that a current is supplied to the coil 82. Thereby, attraction is generated so that the first brake pad 86 is attracted to the core 84 against the biasing force of the springs 88. As a result, the brake unit 34 is released so that the output shaft 32 is allowed to rotate.

When the control part 92 turns the driving signal OFF so that no current is supplied to the coils 39, the brake engaging means of the control part 92 performs brake engaging, stopping feeding the brake releasing signal to the driver 94 so that no current is supplied to the coil 82. Thereby, generation of the attraction is stopped, so that the biasing force of the springs 88 causes the first brake pad 86 to press the brake disc 85 against the second brake pad 87. Accordingly, the brake disc 85 is sandwiched between the first and second brake pads 86 and 87. As a result, the brake unit 34 is put into operation, so that the rotation of the output shaft 32 is stopped. Further, the braking torque generated by the brake unit 34 is set so as to be greater than the maximum torque of the motor 31.

As described above, when the motor is not driven with no current being supplied to the motor 31, the brake disc 85 of the brake unit 34 is mechanically engaged with the first and second brake pads 86 and 87 by the biasing force of the springs 88. This stops the output shaft 32 from rotating. Therefore, it is possible to prevent the ejector pin from moving when a cleaning operation is performed with mold opening being performed. Accordingly, since the ejector pin is prevented from being moved backward, it is possible to continue the cleaning operation.

The brake unit 34 is provided behind the rear flange 26 outside the frame 28, and the brake unit 34 is removable from the frame 28, so that it is possible to maintain and manage the brake unit with ease. Since part of the brake unit 34 is left open on the sides of the bracket 43, it is possible to check the condition of friction of the brake disc 85 and the first and second brake pads 86 and 87 with ease, so that it is possible to maintain and manage the brake unit 34 with ease.

In order to release the brake unit 34, a current is supplied to the coil 82, thereby generating an electromagnetic force. However, there is no limitation to this, and it is also possible to release the brake unit 34 using a drive unit such as an air cylinder or an electric expansion and contraction means.

In this embodiment, in the case of cleaning the ejector pin, engagement of the brake unit 34 is performed, thereby stopping the output shaft 32 from rotating. It is also possible, at the time of operating an injection molding machine semi-automatically, to stop the output shaft 32 from rotating by engaging the brake unit 34 while stopping the driving of the motor 31. Accordingly, in the semi-automatic operation, it is possible to easily take out a molded article, which is ejected by the ejector pin.

In this embodiment, the ejector pin is stopped from moving by causing the brake unit 34 to operate when the motor 31 is stopped.

In the above-described embodiment, the bracket 43 has a strip shape. However, there is no limitation to this. For example, the bracket may be shaped to cover the brake unit 34 so that at least part or multiple parts of the brake unit 34 are left open on its sides. That is, the bracket 43 may have any structure as long as the condition of friction of the first and second brake pads 86 and 87 can be visually recognized.

As described above, a drive unit of a molding machine according to this embodiment includes a driven part of the molding machine; a motor coupled to the driven part, having a frame, and driven to rotate an output shaft; a brake unit provided to the frame and stopping the rotation of the output shaft; and a brake cover attached to the frame and leaving at least part of the brake unit open.

According to the above-described configuration, since the brake unit stops the rotation of the output shaft, it is possible to stop the driven part from moving when a predetermined operation is performed with driving of the drive unit being stopped. Accordingly, it is possible to continue the predetermined operation without interruption.

Further, since at least part of the brake unit is open, it is possible to maintain and manage the brake unit with ease.

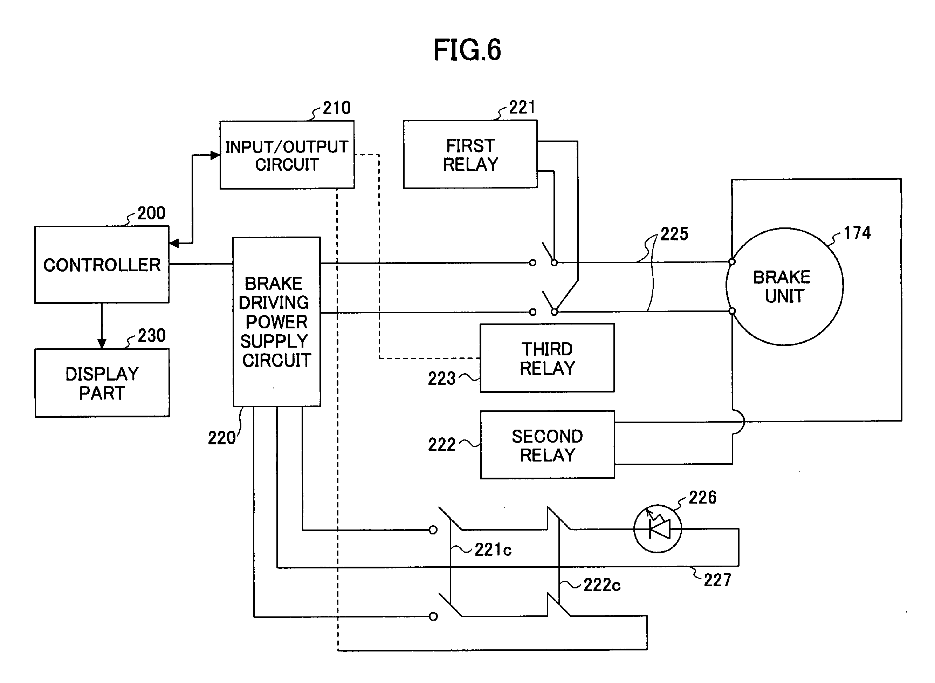

Next, a description is given, with reference to FIGS. 6 through 8, of a second embodiment of the present invention.

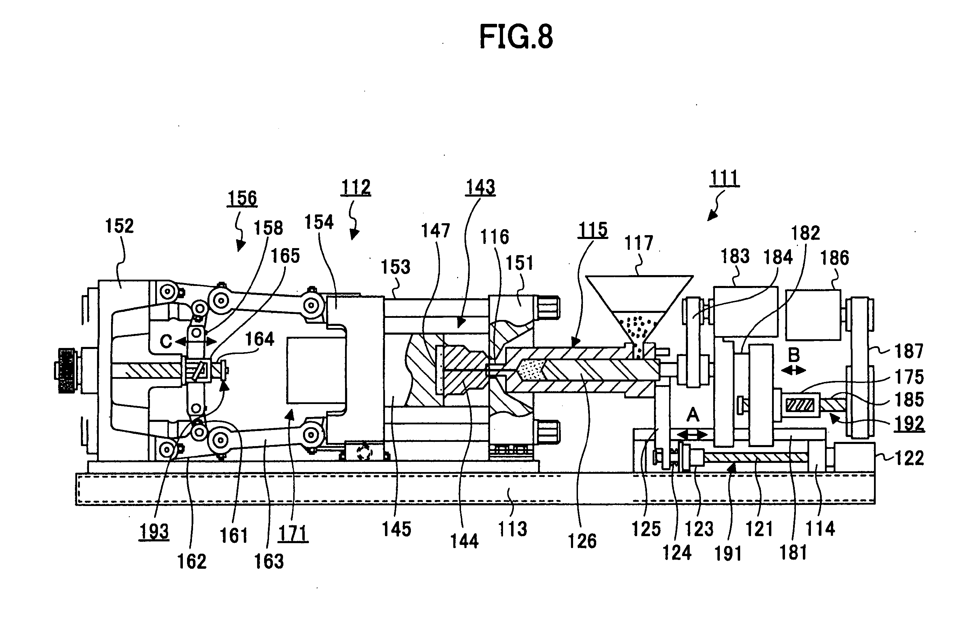

First, a description is given, with reference to FIG. 8, of a configuration of an injection molding machine according to the second embodiment of the present invention.

In FIG. 8, the injection molding machine according to the second embodiment of the present invention includes an injection apparatus 111; a mold clamping apparatus 112 provided so as to oppose the injection apparatus 111; a molding machine frame 113 supporting the injection apparatus 111 and the mold clamping apparatus 112; an injection apparatus frame 114 supported by the molding machine frame 113 and supporting the injection apparatus 111; a guide 181 provided in the longitudinal directions of the injection apparatus frame 114; and a mold apparatus 143 formed of a stationary mold 144 and a movable mold 145.

A ball screw shaft 121 is rotatably supported by the injection apparatus frame 114, and one end of the ball screw shaft 121 is coupled to a motor for plasticization movement 122. The ball screw shaft 121 and a ball screw nut 123 are screwed together, and the ball screw nut 123 and the injection apparatus 111 are coupled through a spring 124 and a bracket 125. Accordingly, when the motor 122 is driven in the forward direction or the reverse direction, the rotational motion of the motor for plasticization movement 122 is converted into linear motion by the combination of the ball screw shaft 121 and the ball screw nut 123, that is, a screw unit 191, and this linear motion is transmitted to the bracket 125. Then, the bracket 125 is moved in the directions of arrow A along the guide 181, so that the injection apparatus 111 is moved forward and backward.

A heating cylinder 115 is fixed to the bracket 125 so as to extend forward (leftward in the drawing). An injection nozzle 116 is provided at the front end (left end in the drawing) of the heating cylinder 115. A hopper 117 is provided on the heating cylinder 115, and a screw 126 is provided inside the heating cylinder 115 so as to be movable forward and backward (leftward and rightward in the drawing) and rotatable. The screw 126 has its rear end (right end in the drawing) supported by a support member 182.

A servomotor for metering apparatus driving (hereinafter referred to as metering servomotor) 183 is attached to the support member 182. The rotational motion generated by driving the metering servomotor 183 is transmitted to the screw 126 through a timing belt 184.

A ball screw shaft 185 is rotatably supported parallel to the screw 126 on the injection apparatus frame 114. The ball screw shaft 185 and a servomotor for injection apparatus driving (hereinafter referred to as injection servomotor) 186 are coupled through a timing belt 187. The front end of the ball screw shaft 185 is screwed into a ball screw nut 175 fixed to the support member 182. Accordingly, when the injection servomotor 186 is driven, its rotational motion is converted into linear motion by the combination of the ball screw shaft 185 and the ball screw nut 175, that is, a screw unit 192, and the linear motion is transmitted to the support member 182.

Next, a description is given of an operation of the injection apparatus 111 of the above-described configuration. First, in a metering process, the screw 126 is rotated through the timing belt 184 by driving the metering servomotor 183, thereby causing the screw 126 to move backward (move rightward in the drawing) to a predetermined position. At this point, resin supplied from the hopper 117 is heated and melted in the heating cylinder 115, and is stored in front of the screw 126 as the screw 126 moves backward.

Next, in an injection process, the injection nozzle 116 is pressed against the stationary mold 144, and the injection servomotor 186 is driven so that the ball screw shaft 185 is rotated through the timing belt 187. At this point, the support member 182 is moved with the rotation of the ball screw shaft 185 so as to move the screw 126 forward (leftward in the drawing). Thereby, the resin stored in front of the screw 126 is ejected from the injection nozzle 116 so as to fill in a cavity space 147 formed between the stationary mold 144 and the movable mold 145.

Next, a description is given of the mold clamping apparatus 112. The mold clamping apparatus 112 includes a stationary platen 151; a toggle support 152; tie bars 153 provided between the stationary platen 151 and the toggle support 152; a movable platen 154 provided opposite the stationary platen 151 so as to be movable forward and backward along the tie bars 153; and a toggle mechanism 156 provided between the movable platen 154 and the toggle support 152. The stationary mold 144 and the movable mold 145 are attached to the stationary platen 151 and the movable platen 154, respectively, so as to oppose each other.

The toggle mechanism 156 performs mold closing, mold clamping, and mold release by bringing the movable mold 145 close to or away from the stationary mold 144 by moving the movable platen 154 along the tie bars 153 by causing a crosshead 158 to be moved forward and backward between the toggle support 152 and the movable platen 154 by a servomotor not shown in the drawing.

For this, the toggle mechanism 156 includes toggle levers 161 supported so as to be swingable with respect to the crosshead 158; toggle levers 162 supported so as to be swingable with respect to the toggle support 152; and toggle arms 163 supported so as to be swingable with respect to the movable platen 154. There is link coupling between the toggle levers 161 and the toggle levers 162 and between the toggle levers 162 and the toggle arms 163.

A ball screw shaft 164 is supported so as to be rotatable with respect to the toggle support 152. The ball screw shaft 164 and a ball screw nut 165 fixed to the cross head 158 are screwed together. A servomotor (whose graphical representation is omitted) is attached to a side of the toggle support 152 so as to rotate the ball screw shaft 164.

Accordingly, when the servomotor is driven, the rotational motion of the servomotor is converted into linear motion by the combination of the ball screw shaft 164 and the ball screw nut 165, that is, a screw unit 193. Then, the linear motion is transmitted to the crosshead 158, so that the crosshead 158 is moved forward and backward in the directions of arrow C. That is, when the crosshead 158 is moved forward (rightward in the drawing), the toggle mechanism 156 is extended to move the movable platen 154 forward, so that mold closing and mold clamping are performed. On the other hand, when the crosshead 158 is moved backward (leftward in the drawing), the toggle mechanism 156 bends to move the movable platen 154 backward, so that mold opening is performed.

In the following description, a description is given of the present invention applied to an ejector apparatus. The basic configuration of the ejector apparatus is the same as the configuration described with reference to FIG. 1. First, a description is given of the control system of each apparatus driving servomotor.

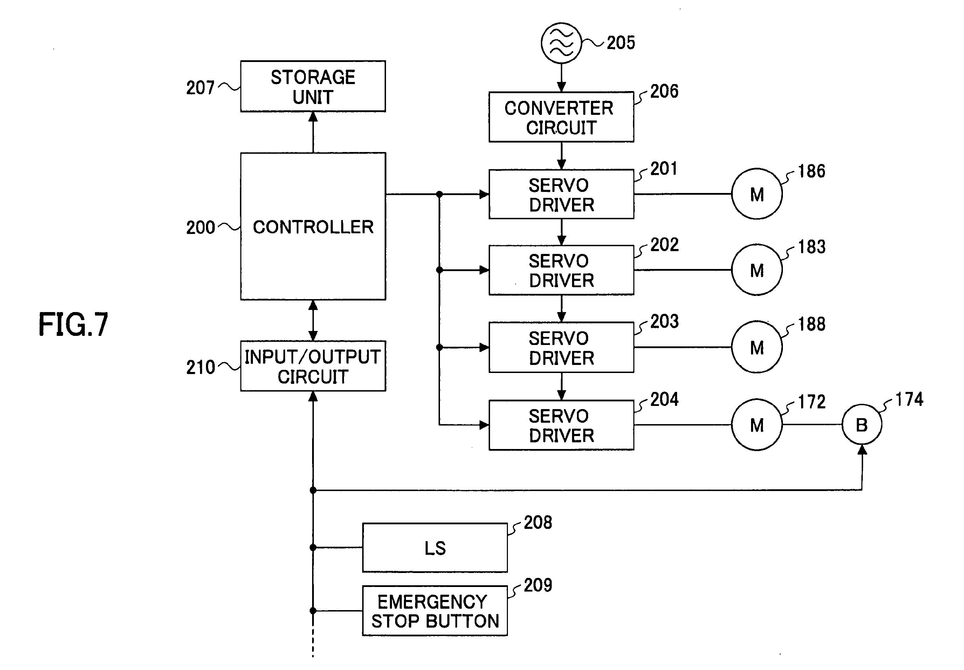

FIG. 7 shows a servomotor for mold clamping apparatus driving (hereinafter referred to as mold clamping servomotor) 188 and a servomotor for ejector apparatus driving (hereinafter referred to as ejector servomotor) 172 with a brake unit 174 by an electromagnetic brake besides the above-described metering servomotor 183 and injection servomotor 186.

In FIG. 7, the metering servomotor 183, the injection servomotor 186, the mold clamping servomotor 188, and the ejector servomotor 172 are controlled by a controller 200 through servo drivers 201 through 204, respectively. Power for motor driving is supplied from a commercial power supply 205 to each of the servo drivers 201 through 204 via a converter circuit 206. The brake unit 174 is controlled by the controller 200 through an input/output circuit 210. A description is given below of a power supply for driving the brake unit 174. A storage unit 207 is connected to the controller 200. The storage unit 207 stores a variety of data items such as molding conditions set and input by an operator, detected data obtained from various sensors, and abnormality detection data at the time of occurrence of abnormalities. That is, besides controlling each motor shown in the drawing by reading out the molding conditions stored in the storage unit 207, the controller 200 performs a molding operation by controlling the entire injection molding machine including driven parts not shown in the drawing.

Further, FIG. 7 shows a limit switch 208, which turns ON when a safety door provided to the injection molding machine is opened while the injection molding machine is in operation, and an emergency stop button 209, which an operator operates manually in case of emergency. When the limit switch 208 is turned ON or the emergency stop button 209 is pressed, this is communicated to the controller 200 via the input/output circuit 210. In this case, the controller 200 stops all the servomotors. The rotation of each servomotor is detected by a detector such as an encoder provided thereto (not shown in the drawing), and is sent to the controller 200. When detecting the stoppage of the rotation of the servomotor, the controller 200 shuts off the driving power supply to the brake unit 174, and causes the brake unit 174 to perform braking.

Next, a description is given, with reference also to FIG. 6, of the second embodiment of the present invention applied to an ejector apparatus. The braking torque Tb in the brake unit 174 is set to be greater than the peak torque Tp of the servomotor for ejector apparatus driving 172, and an open-circuit detection circuit is provided in the brake driving circuit of the brake unit 174.

FIG. 6 shows a brake driving circuit with an open-circuit detection circuit according to the present invention. In FIG. 6, power for braking is supplied from a brake driving power supply circuit 220 to the brake unit 174 through two interconnection lines 225. The brake driving power supply circuit 220 is connected to the commercial power supply 205 shown in FIG. 7.

This brake driving circuit includes first through third relays 221 through 223 for open-circuit detection. The magnetizing coil of the first relay 221 is connected between the two interconnection lines 225. The magnetizing coil of the second relay 222 is connected to the driving power input part of the brake unit 174. The magnetizing coil of the third relay 223 is connected to the input/output circuit 210. Two a-contacts 223c of the third relay 223 are the two interconnection lines 225, and are connected to the connection of the first relay 221 and the interconnection lines 225. The position of this connection defines the below-described range of detection of the open circuit of the interconnection lines 225. That is, the interconnection lines 225 between the two a-contacts 223c of the third relay 223 and the brake unit 174 are the open-circuit detection range. Accordingly, it is preferable that the connecting position of the two a-contacts 223c of the third relay 223 be as close to the brake driving power supply circuit 220 as possible.

Further, a lighting circuit 227 of a lamp 226 by an LED or the like is connected to the brake driving power supply circuit 220. One of two a-contacts 221c of the first relay 221 and one of two b-contacts 222c of the second relay 222 are connected in series to the lighting circuit 227 by insertion. The other one of the two a-contacts 221c of the first relay 221 and the other one of the two b-contacts 222c of the second relay 222 are connected in series between the brake driving power supply circuit 220 and the input/output circuit 210. That is, when the first relay 221 is ON and the second relay 222 is OFF, the lamp 226 lights up, and this is communicated to the input/output circuit 210. A display part 230 by a cathode-ray tube unit or a liquid crystal display is connected to the controller 200. When the lighting of the lamp 226 is communicated to the input/output circuit 210, this is communicated to the controller 200. At this time, the controller 200 causes the display part 230 to display the open circuit of the brake driving circuit.

The brake driving circuit operates as follows.

It is assumed that the ejector servomotor 172 is being braked by the brake unit 174. Needless to say, this braking torque Tb is greater than or equal to the peak torque Tp of the ejector servomotor 172. In the case of releasing the brake by the brake unit 174, the controller 200 turns the third relay 223 ON through the input/output circuit 210. As a result, the a-contacts 223c of the third relay 223 are closed, so that power is supplied to the electromagnetic brake of the brake unit 174. Thereby, the brake on the ejector servomotor 172 is released. In the above-described state, the first relay 221 is excited so that its a-contacts 221c are closed, and the second relay 222 are also excited so that its b-contacts 222c are open. As a result, the lamp 226 does not light up.

However, if an open circuit occurs in the interconnection lines 225, the power to the brake unit 174 is shut off. As a result, the ejector servomotor 172 is braked. At the same time, the excitation of the second relay 222 is stopped so that the second relay 222 turns OFF, and its b-contacts 222c are closed. Consequently, since the first relay 221 remains ON with its a-contacts 221c closed, the lamp 226 lights up, and this is communicated to the controller 200. The controller 200 causes the display part 230 to display the open circuit.

On the other hand, it is assumed that the ejector servomotor 172 is being rotated and the brake unit 174 is not in operation. That is, power is being supplied from the brake driving power supply circuit 220 to the brake unit 174. If an open circuit occurs in the interconnection lines 225 in this state, the ejector servomotor 172 is braked by the brake unit 174. At the same time, the excitation of the second relay 222 is stopped so that the second relay 222 turns OFF, and its b-contacts 222c are closed. As a result, since the first relay 221 remains ON with its a-contacts 221c closed, the lamp 226 lights up, and this is communicated to the controller 200. The controller 200 causes the display part 230 to display the open circuit, and at the same time, stops the rotation of the ejector servomotor 172 through the servo driver 204. Accordingly, it is possible to prevent the operation of the ejector servomotor 172 from being continued with the ejector servomotor 172 being braked by the brake unit 17.4.

As described above, if an open circuit occurs in the brake driving circuit, particularly in the interconnections to the brake unit 174, that is immediately indicated by the lamp 226 and displayed by the display part 230. Therefore, an operator can be immediately aware of the occurrence of the open circuit.

On the other hand, in the case of performing maintenance such as cleaning on the ejector apparatus, it is necessary to drive the ejector servomotor 172 so as to put the ejector pin (1-1 of FIG. 1) into a projected state. This state can be achieved by causing the ejector pin to be projected by driving the ejector servomotor 172 with the peak torque Tp, and thereafter, stopping its rotation and applying a brake thereto with the brake unit 174. Then, in this state, since the brake unit 174 is applying a brake to the ejector servomotor 172 with the braking torque Tb greater than its peak torque Tp, it is possible to prevent the ejector pin from being returned by the biasing force of the return springs (1-9 of FIG. 1). Further, while the brake unit is in operation, there is no need to supply current for braking the servomotor. Therefore, it is possible to prevent the servomotor from being damaged by excessive heat generation.

As described above, according to this embodiment, by using, as a brake unit, a brake unit that can perform braking with a torque greater than the peak torque generated by an ejector apparatus driving motor to which the brake unit is provided, it is possible to prevent the apparatus from moving even with a reaction force corresponding to the maximum thrust of the apparatus driving motor being applied as an apparatus load while braking is being performed by the brake unit.

In the case of the brake unit being an electromagnetic brake, even if an open circuit occurs in a brake driving circuit, it is possible to prevent operating against the braking force with a brake being applied by the brake unit. Accordingly, it is possible to prevent seizure and abrasion of a brake lining and heat generation of a motor caused by operating with a brake in operation. Further, it is possible to prevent sudden stoppage of the apparatus due to their progress.

The present invention is applicable not only to a brake unit by an electromagnetic brake but also to a motor with a mechanical brake unit. In this case, the open-circuit detection function is omitted. Further, the present invention is applicable not only to a common injection molding machine but also effectively to, for example, a vertical-type injection molding machine.

The present invention is not limited to the specifically disclosed embodiments, and variations and modifications may be made without departing from the scope of the present invention as defined by the appended claims.

### INDUSTRIAL APPLICABILITY

The present invention can produce a great effect by being applied to molding machines, in particular, injection molding machines.

## Claims

1. A drive unit of a molding machine, comprising:
a motor (31, 172) for driving an ejector apparatus (171) of the molding machine, the motor (172) having an output shaft (32) coupled to an ejector apparatus (171) having an ejector pin , and configured to rotate the output shaft (32); and
a brake unit (34, 174) configured to stop rotation of the output shaft (32);
wherein the braking torque of the brake unit (34, 174) is set to be greater than or equal to a torque generated by the biasing force of a return spring (88) of the ejector apparatus (171), the return spring (88) biasing the ejector pin of the ejector apparatus (171) in a direction opposite to a direction in which the ejector pin is projected **characterized in that**
said brake unit (34, 174) is provided on a frame (28) of the motor (31, 172),
wherein a braking torque of the brake unit (34, 174) is set to be greater than a maximum torque of the motor (31, 172)

2. The drive unit of the molding machine as claimed in claim 1, wherein the brake unit (34, 174) comprises:
a brake disc (85) attached to the output shaft (32);
a brake pad (86, 87) fixed so as to be unrotatable with respect to the frame (28), and configured to be pressed against the brake disc (85); and
an operation part (88) provided on the frame (28) and configured to press the brake pad (86, 87) against the brake disc (85).

3. The drive unit of the molding machine as claimed in claim 2, wherein the brake unit (34, 174) is an electromagnetic brake having an electromagnetic coil (82) configured to move the brake pad (86, 87) in order to release a braking force.

4. The drive unit of the molding machine as claimed in claim 1, further comprising:
a brake cover (43) attached to the frame (28) and covering the brake unit (34, 174) with a part of the brake unit (34, 174) being open; and
a rotational speed detection part (33) attached to the brake cover (43) and configured to detect a rotational speed of the output shaft (32).

5. The drive unit of the molding machine as claimed in claim 1, further comprising:
a brake cover (43) attached to the frame (28) and covering the brake unit (34, 174) with a part of the brake unit (34, 174) being open,
wherein the brake cover (43) comprises a strip-shaped body (45).

6. The drive unit of the molding machine as claimed in claim 1, wherein:
the output shaft (32) is hollow; and
a part (90) of a movement mechanism for moving the ejector apparatus (171) is provided in the output shaft (32).

7. An injection molding machine including a drive unit as set forth in any of the preceding claims.

8. The injection molding machine as claimed in claim 7, further comprising:
a brake driving circuit (220) configured to supply power to the brake unit (174);
an open-circuit detection circuit (221, 222, 223) configured to detect an open circuit of the brake driving circuit (220); and
a controller (200) configured to cause a display (230) to display the open circuit and stop rotation of the motor upon detection of the open circuit in the open-circuit detection circuit (221, 222, 223),
wherein the brake unit (174) is an electromagnetic brake.

9. . The injection molding machine as claimed in claim 7, further comprising:
a controller (200) configured to cause the brake unit (174) to perform braking after detecting stoppage of rotation of the motor having the brake unit (174).

## Patentansprüche

1. Antriebseinheit für eine Spritzguss- bzw. Formmaschine, die Folgendes aufweist:
einen Motor (31, 172) zum Antreiben einer Auswerfervorrichtung (171) der Formmaschine, wobei der Motor (172) eine Abtriebswelle (32) besitzt, die mit einer Auswerfervorrichtung (171) mit einem Auswerferstift gekoppelt ist, und der so konfiguriert ist, dass er die Abtriebswelle (32) dreht; und
eine Bremseinheit (34, 174), die so konfiguriert ist, dass sie die Rotation der Abtriebswelle (32) anhält;
wobei das Bremsmoment der Bremseinheit (34, 174) so eingestellt ist, dass es größer oder gleich einem Drehmoment ist, das durch die Vorspannkraft einer Rückstellfeder (88) der Auswerfervorrichtung (171) erzeugt wird, wobei die Rückstellfeder (88) den Auswerferstift der Auswerfervorrichtung (171) in einer Richtung entgegengesetzt zu einer Richtung vorspannt, in der der Auswerferstift vorragt,
**dadurch gekennzeichnet, dass**
die Bremseinheit (34, 174) auf einem Rahmen (28) des Motors (31, 172) vorgesehen ist,
wobei ein Bremsmoment der Bremseinheit (34, 174) so eingestellt wird, dass es größer als ein maximales Drehmoment des Motors (31, 172) ist.

2. Antriebseinheit der Formmaschine gemäß Anspruch 1, wobei die Bremseinheit (34, 174) Folgendes aufweist:
eine Bremsscheibe (85), die an der Abtriebswelle (32) angebracht ist;
einen Bremsklotz (86, 87), der so befestigt ist, dass er in Bezug auf den Rahmen (28) nicht drehbar ist, und so konfiguriert ist, dass er gegen die Bremsscheibe (85) drückt; und
einen Betriebsteil (88), der auf dem Rahmen (28) vorgesehen und konfiguriert ist, um den Bremsklotz (86, 87) gegen die Bremsscheibe (85) zu drücken.

3. Antriebseinheit der Formmaschine gemäß Anspruch 2, wobei die Bremseinheit (34, 174) eine elektromagnetische Bremse mit einer elektromagnetischen Spule (82) ist, die so konfiguriert ist, dass sie den Bremsklotz (86, 87) bewegt, um eine Bremskraft freizusetzen.

4. Antriebseinheit der Formmaschine gemäß Anspruch 1, die ferner Folgendes aufweist:
eine Bremsabdeckung (43), die an dem Rahmen (28) angebracht ist und die Bremseinheit (34, 174) abdeckt, wobei ein Teil der Bremseinheit (34, 174) offen bleibt; und
einen Drehzahldetektionsteil (33), der an der Bremsabdeckung (43) angebracht und konfiguriert ist, um eine Drehzahl der Abtriebswelle (32) zu detektieren.

5. Antriebseinheit der Formmaschine gemäß Anspruch 1, die ferner Folgendes aufweist:
eine Bremsabdeckung (43), die an dem Rahmen (28) angebracht ist und die Bremseinheit (34, 174) abdeckt, wobei ein Teil der Bremseinheit (34, 174) offen bleibt,
wobei die Bremsabdeckung (43) einen streifenförmigen Körper (45) aufweist.

6. Antriebseinheit der Formmaschine gemäß Anspruch 1, wobei:
die Abtriebswelle (32) hohl ist; und
ein Teil (90) eines Bewegungsmechanismus zum Bewegen der Auswerfervorrichtung (171) in der Abtriebswelle (32) vorgesehen ist.

7. Spritzgussmaschine, die eine Antriebseinheit gemäß einem der vorangehenden Ansprüche aufweist.

8. Spritzgussmaschine gemäß Anspruch 7, die ferner Folgendes aufweist:
eine Bremsenantriebsschaltung (220), die so konfiguriert ist, dass sie Leistung an die Bremseinheit (174) liefert;
eine Leerlaufdetektionsschaltung (221, 222, 223), die so konfiguriert ist, dass sie einen Leerlauf der Bremsenantriebsschaltung (220) detektiert; und
eine Steuervorrichtung (200), die so konfiguriert ist, dass sie eine Anzeige (230) veranlasst, den Leerlauf und das Anhalten der Rotation des Motors bei Detektion eines Leerlaufs in der Leerlaufdetektionsschaltung (221, 222, 223) anzuzeigen,
wobei die Bremseinheit (174) eine elektromagnetische Bremse ist.

9. Spritzgussmaschine gemäß Anspruch 7, die ferner Folgendes aufweist:
eine Steuervorrichtung (200), die so konfiguriert ist, dass sie eine Bremseinheit (174) veranlasst, ein Bremsen auszuführen, und zwar nach der Detektion des Anhaltens der Rotation des Motors, der die Bremseinheit (174) aufweist.

## Revendications

1. Unité d'entraînement d'une machine de moulage, comprenant :
un moteur (31, 172) pour entraîner un éjecteur (171) de la machine de moulage, le moteur (172) ayant un arbre de sortie (32) couplé à un éjecteur (171) comportant une broche d'éjecteur, et agencé pour faire tourner l'arbre de sortie (32) ; et
une unité de freinage (34, 174) agencée pour arrêter la rotation de l'arbre de sortie (32) ;
dans laquelle le couple de freinage de l'unité de freinage (34, 174) est réglé de façon à être supérieur ou égal à un couple généré par la force de sollicitation d'un ressort de retour (88) de l'éjecteur (171), le ressort de retour (88) sollicitant la broche d'éjecteur de l'éjecteur (171) dans une direction opposée à la direction dans laquelle la broche d'éjecteur est projetée, **caractérisé en ce que**
l'unité de freinage (34, 174) est prévue sur un châssis (28) du moteur (31, 172),
dans lequel le couple de freinage de l'unité de freinage (34, 174) est réglé de façon à être supérieur au couple maximum du moteur (31, 172).

2. Unité d'entraînement de la machine de moulage selon la revendication 1, dans laquelle l'unité de freinage (34, 174) comprend :
un disque de freinage (85) fixé à l'arbre de sortie (32) ;
un plot de freinage (86, 87) fixé de façon à ne pas pouvoir tourner par rapport au châssis (28), et agencé pour être pressé contre le disque de freinage (85) ; et
une partie d'actionnement (88) prévue sur le châssis (28) et agencée pour presser le plot de freinage (86, 87) contre le disque de freinage (85).

3. Unité de freinage de la machine de moulage selon la revendication 2, dans laquelle l'unité de freinage (34, 174) est un frein électromagnétique comportant un enroulement électromagnétique (82) agencé pour déplacer le plot de freinage (86, 87) afin de la libérer une force de freinage.

4. Unité d'entraînement de la machine de moulage selon la revendication 1, comprenant en outre :
un couvercle de frein (43) fixé au châssis (28) et couvrant l'unité de freinage (34, 174), une partie de l'unité de freinage (34, 174) étant ouverte ; et
une partie de détection de vitesse de rotation (33) fixée au couvercle de frein (43) et agencée pour détecter une vitesse de rotation de l'arbre de sortie (32).

5. Unité d'entraînement de la machine de moulage selon la revendication 1, comprenant en outre :
un couvercle de frein (43) fixé au châssis (28) et couvrant l'unité de freinage (34, 174), une partie de l'unité de freinage (34, 174) étant ouverte,
dans lequel le couvercle de frein (43) comprend un corps en forme de bande (45).

6. Unité d'entraînement de la machine de moulage selon la revendication 1, dans laquelle :
l'arbre de sortie (32) est creux ; et
une partie (90) d'un mécanisme de mouvement destiné à déplacer l'éjecteur (171) est prévue sur l'arbre de sortie (32).

7. Machine de moulage par injection comprenant une unité d'entraînement selon l'une quelconque des revendications précédentes.

8. Machine de moulage par injection selon la revendication 7, comprenant en outre :
un circuit de pilotage de frein (220) agencé pour fournir de l'énergie à l'unité de freinage (174) ;
un circuit de détection de circuit ouvert (221, 222, 223) agencé pour détecter une ouverture du circuit de pilotage de frein (220) ; et
un contrôleur (200) agencé pour faire en sorte qu'un afficheur (230) affiche que le circuit est ouvert et arrête la rotation du moteur sur une détection de circuit ouvert dans le circuit de détection de circuit ouvert (221, 222, 223),
dans laquelle l'unité de freinage (174) est un frein électromagnétique.

9. Machine de moulage par injection selon la revendication 7, comprenant en outre :
un contrôleur (200) agencé pour faire en sorte que l'unité de freinage (174) réalise un freinage après la détection d'un arrêt de rotation du moteur comportant l'unité de freinage (174).
